# EUROPÄISCHE PATENTSCHRIFT

(11) **EP 2 019 915 B1**
(45) Veröffentlichungstag und Bekanntmachung des Hinweises auf die Patenterteilung: **22.12.2010**
(21) Anmeldenummer: 07725361.5
(22) Anmeldetag: 18.05.2007
(51) Int. Cl.: F01P 7/16, G05D 23/13

(54) **THERMOSTATVENTIL**
THERMOSTATIC VALVE
SOUPAPE THERMOSTATIQUE

(30) Priorität: 23.05.2006 DE 102006025065
(43) Veröffentlichungstag der Anmeldung: 04.02.2009
(73) Patentinhaber: Behr Thermot-tronik GmbH, 70806 Kornwestheim (DE)
(72) Erfinder: AUWEDER, Andreas, 71665 Vaihingen/Enz (DE); WILLERS, Eike, 70469 Stuttgart (DE)
(74) Vertreter: Patentanwälte Ruff, Wilhelm, Beier, Dauster & Partner
(86) Internationale Anmeldenummer: PCT/EP2007/004453
(87) Internationale Veröffentlichungsnummer: WO 2007/134807

(56) Entgegenhaltungen:
- WO-A-2004/046516
- DE-A1- 10 206 359
- DE-B1- 2 755 462
- GB-A- 2 281 613

## Beschreibung

Die Erfindung betrifft ein Thermostatventil für eine Kühlanlage eines Verbrennungsmotors mit einem in einer Mischkammer anzuordnenden thermostatischen Arbeitselement, das als Antriebselement für ein zwischen der Mischkammer und einem Anschluss von einem Kühlmittelkühler anzuordnenden Hauptventilelement und für zwei Kurzschlussventilelemente dient, die vor der Mischkammer anzuordnen sind und die derart relativ zu einem Ventilsitz angeordnet sind, dass bei einer Ausfahrbewegung des thermostatischen Arbeitselementes das zunächst geschlossene Kurzschlussventilelement öffnet und das andere aufgrund einer Schiebereinheit bei weiterer Ausfahrbewegung wieder schließt.

Ein bekanntes Thermostatventil der eingangs genannten Art (DE 2755462 B1, Fig. 5 bis 8) ist für eine Motoreintrittsregelung eingesetzt. Es besitzt als Kurzschlussventilelemente zwei Kurzschlussventilteller, zwischen denen ein Ventilsitz angeordnet ist. Die beiden Kurzschlussventilteller sind auf einem Bolzen verschiebbar und mit Ausgleichsfedern belastet. In kaltem Zustand schließt ein Kurzschlussventilteller die Verbindung der Mischkammer vom Motoraustritt, so dass das Warmlaufen beschleunigt wird. Wenn das thermostatische Arbeitselement aufgrund der Erwärmung des Kühlmittels ausfährt, so öffnet dieser Ventilteller, während der andere Kurzschlussventilteller entsprechend der Ausfahrbewegung das Kurzschlussventil allmählich verschließt.

Ein ähliches Thermostatvertil ist aus GB 2 281 613 bekannt.

Der Erfindung liegt die Aufgabe zugrunde, das Thermostatventil der eingangs genannten Art konstruktiv zu vereinfachen und darüber hinaus die Funktionssicherheit zu erhöhen.

Diese Aufgabe wird dadurch gelöst, dass ein gemeinsames Kurzschlussventilelement vorgesehen ist, das einen als Kurzschlussventilschieber dienenden Abschnitt und einen in Ausfahrrichtung des thermostatischen Arbeitselementes vorgeschalteten Kurzschlussventilteller aufweist, zwischen denen ein gemeinsamer Ventilsitz vorgesehen ist, und dass in dem gemeinsamen Ventilsitz ein zur Mischkammer hin öffnendes Überdruckventil vorgesehen ist.

Mittels des gemeinsamen Kurzschlussventilelementes lässt sich die Zahl der Bauteile reduzieren. Da eines der Ventilelemente als Kurzschlussventilschieber ausgebildet ist, kann auf eine Feder verzichtet werden. Außerdem wird sichergestellt, dass dann, wenn in kaltem Zustand die Motordrehzahl erhöht wird, keine thermischen und / oder mechanischen Beschädigungen an dem Verbrennungsmotor oder zugehörigen Komponenten auftreten. Hierfür ist das Überdruckventil vorgesehen, das bei einem erhöhten Druck die Durchströmung des Kühlmittels von dem Motoraustritt zum Motoreintritt freigibt.

In Ausgestaltung der Erfindung wird vorgesehen, dass der gemeinsame Ventilsitz von einem ringförmigen Bauteil gebildet wird, das einen dichtend in einen Motorblock oder Zylinderkopf einsetzbaren Abschnitt und einen nach innen ragenden Ringsteg aufweist, dessen innerer Rand als Ventilsitz für den Kurzschlussventilschieber und als Ventilsitz für den Kurzschlussventilteller dient. Dadurch wird es möglich, das Thermostatventil als eine vorgefertigte Baueinheit auszubilden, die als solche in einen Verbrennungsmotor eingebaut werden kann, ohne dass an dem Verbrennungsmotor Bearbeitungen, insbesondere für das Kurzschlussventil, beispielsweise für eine Auflagefläche einer Feder, vorgesehen werden müssen.

In weiterer Ausgestaltung der Erfindung wird vorgesehen, dass der Ringsteg des Bauteils mit Durchbrechungen versehen ist, die auf der Seite der Mischkammer mit einem Überdruckventilring abgedeckt sind, der mit einer Überdruckventilfeder belastet ist.

In weiterer Ausgestaltung der Erfindung wird vorgesehen, dass die Überdruckventilfeder an dem gemeinsamen Kurzschlussventilelement abgestützt ist. Dadurch ist es möglich, der Überdruckventilfeder eine zusätzliche Funktion zu geben, nämlich die Funktion einer ergänzenden Rückstellfeder, die benötigt wird, wenn ein Leerweg zwischen dem thermostatischen Arbeitselement und dem Hauptventilelement vorgesehen ist.

Weitere Merkmale und Vorteile der Erfindung ergeben sich aus der nachfolgenden Beschreibung des in der Zeichnung dargestellten Ausführungsbeispiels.
- Fig. 1: zeigt einen axialen Schnitt durch ein erfindungsgemäßes Thermostatventil in "kaltem" Zustand,
- Fig. 2: den axialen Schnitt durch das Thermostatventil bei ange- sprochenem Überdruckventil,
- Fig. 3: den Axialschnitt des Thermostatventils während der Aus- fahrbewegung des thermostatischen Arbeitselementes und
- Fig. 4: den Axialschnitt durch das Thermostatventil bei ausgefahre- nem thermostatischen Arbeitselement.

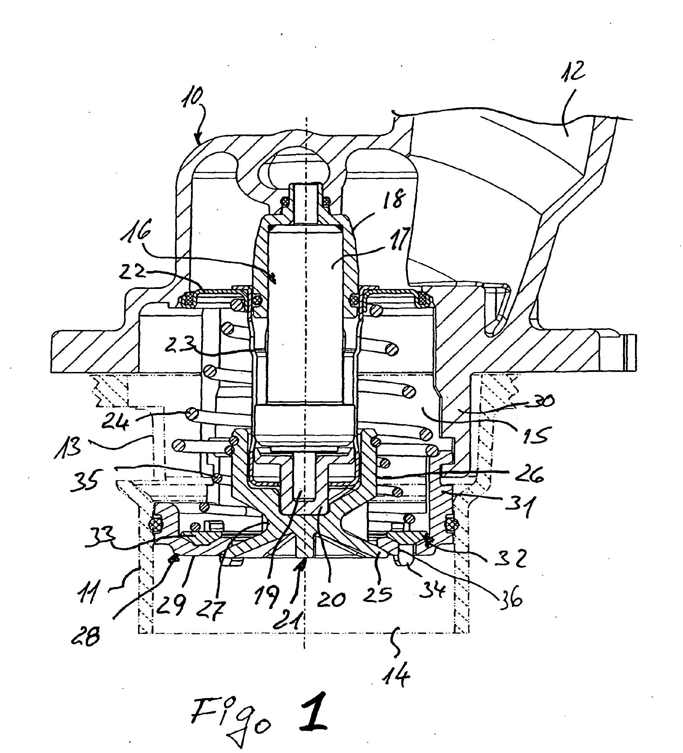

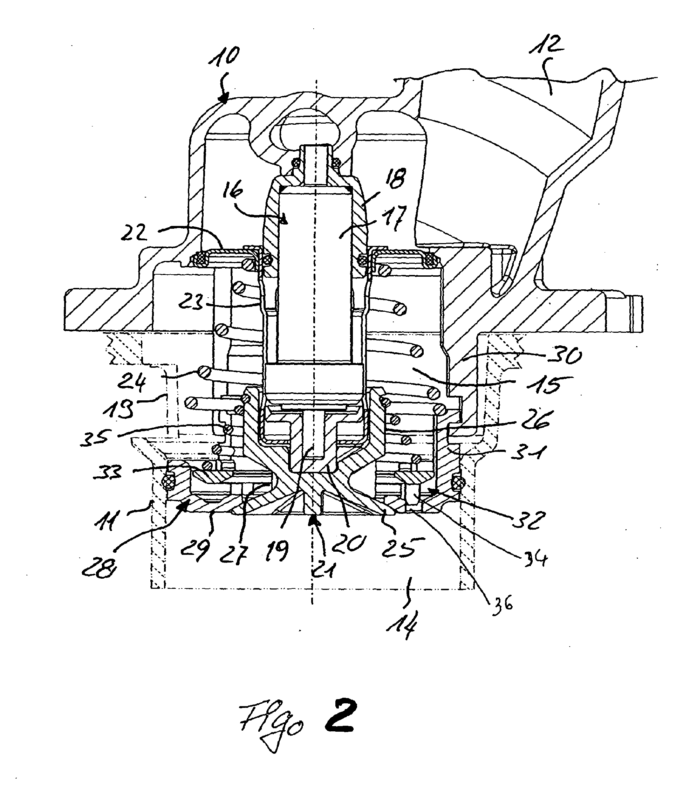

Das in Fig. 1 bis 4 dargestellte Thermostatventil besitzt ein deckelartiges Ventiloberteil 10, das an einem strichpunktiert angedeuteten Motorblock 11 oder einem Zylinderkopf angebracht wird. Das Ventiloberteil 10 besitzt einen Anschluss 12, der von einem nicht dargestellten Kühlmittelkühler führt. Der Motorblock 11 oder Zylinderkopf besitzt eine als Motoreintritt dienende Öffnung 13 und eine mit dem Motoraustritt (Kurzschlusskreislauf) verbundene Öffnung 14.

Zwischen der Öffnung 14 für den Motoraustritt und der Öffnung 13 für den Motoreintritt ist eine Mischkammer 15 vorgesehen, in welche ein thermostatisches Arbeitselement 16 hineinragt. Das Gehäuse 17 des thermostatischen Arbeitselementes 16 ist unter Zwischenfügen einer Kunststoffkappe 18 in dem Ventiloberteil 10 abgestützt. Wenn das Ventiloberteil 10 aus Kunststoff hergestellt wird, kann die Kunststoffkappe 18 in das Ventiloberteil integriert sein. In dem Gehäuse 17 des thermostatischen Arbeitselementes 16 ist ein Dehnstoff angeordnet, insbesondere eine Wachsmischung, die temperaturabhängig ihr Volumen ändert. Bei Volumenzunahme wird ein Arbeitskolben 19 aus dem Gehäuse 17 des thermostatischen Arbeitselementes 16 ausgetrieben. Der Arbeitskolben 19 nimmt über ein hut-förmiges Übertragungsteil 20 bei seiner Ausfahrbewegung zunächst ein Kurzschlussventilelement 21 und anschließend einen Hauptventilteller 22 mit. Dem Hauptventilteller 22 ist ein Ventilsitz des Ventiloberteils 10 zugeordnet. Der Hauptventilteller 22 besitzt ein käfigartiges Mittelteil 23, das das thermostatische Arbeitselement 16 umgreift und dessen Boden dem Übertragungsteil 20 zugeordnet ist. Dem Hauptventilteller 22 ist eine Rückstellfeder oder Schließfeder 24 zugeordnet.

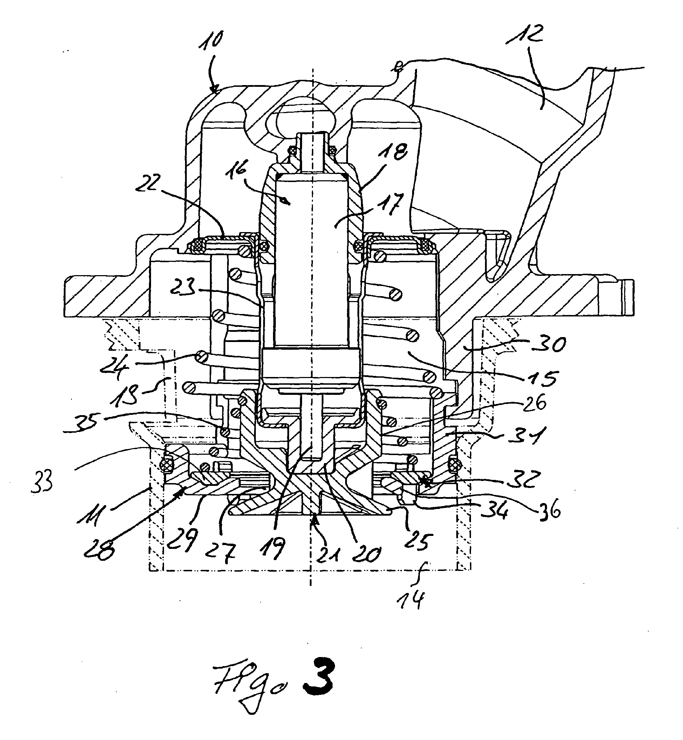

Das Kurzschlussventilelement 21 besitzt einen Kurzschlussventilteller 25 und einen als Kurzschlussventilschieber 26 dienenden Abschnitt. Der Kurzschlussventilteller 25 und der Kurzschlussventilschieber 26 sind in Ausfahrrichtung des thermostatischen Arbeitselementes 16 in einem Abstand zueinander angeordnet. Zwischen ihnen befindet sich eine ringnutartige Aussparung 27, in deren Bereich das Kurzschlussventilelement 21 mit Versteifungsrippen versehen ist, die auch zur axialen Führung dienen, wenn sich das Kurzschlussventilelement 21 in einer geöffneten Stellung befindet (Fig. 3).

Zwischen dem Kurzschlussventilteller 25 und dem Kurzschlussventilschieber 26 ist ein ringförmiges Bauteil 28 angeordnet, das mit einem zylindrischen Abschnitt dichtend in den Motorblock oder Zylinderkopf 11 eingesetzt ist. Weiter weist das ringförmige Bauteil 28 einen nach innen ragenden Ringsteg 29 auf, der als Ventilsitz für den Kurzschlussventilteller 25 und auch als Ventilschiebersitz für den Kurzschlussventilschieber 26 des Kurzschlussventilelementes 21 dient. Die Rückstellfeder oder Schließfeder 24 ist an dem ringförmigen Bauteil 28 abgestützt. Das ringförmige Bauteil 28 ist an dem Ventiloberteil 10 gehalten. Das Ventiloberteil 10 ist mit mehreren, vorzugsweise drei Fingern 30 ausgerüstet, in welche das ringförmige Bauteil 28 mit ähnlichen Fingern 31 eingehängt ist.

In das ringförmige Bauteil 28 ist ein Überdruckventil 32 integriert. Hierzu ist der Ringsteg 29 des ringförmigen Bauteils 28 mit mehreren Durchbrechungen 36 versehen, die mittels eines Überdruckventilrings 33 abgedeckt sind. Der Überdruckventilring 33 ist mit mehreren Nasen 34 versehen, die in die Durchbrechungen 36 des Ringstegs 29 hineinragen und zur Führung des Überdruckventilrings 33 dienen. Der Überdruckventilring 33 ist mit einer Überdruckventilfeder 35 belastet. Diese Überdruckventilfeder 35 ist an dem Kurzschlussventilelement 21 abgestützt. Bei dem Ausführungsbeispiel ist sie in eine Ringnut des Kurzschlussventilelementes 21 eingerastet.

Das hut-förmige Übertragungsteil 20, das auf den Arbeitskolben 19 aufgesteckt ist, durchdringt den Boden des Mittelteils 23 des Hauptventilteller 22 und greift in eine innere Aussparung des Kurzschlussventilelements 21 ein. Zwischen dem flanschartigen Teil des Übertragungsteils 20 und dem Boden des Mittelteils 23 des Hauptventilteller 22 ist ein Abstand vorgesehen, der einen Leerweg bedingt, über welchen das thermostatische Arbeitselement 16 bei einer Ausfahrbewegung zunächst nur das Kurzschlussventilelement 21 mitnimmt und erst nach Durchlaufen des Leerweges auch den Hauptventilteller 22. Die Überdruckventilfeder 35 ist so ausgebildet, dass sie auch als Rückstellfeder dient, die bewirkt, dass der Arbeitskolben 19 von dem Kurzschlussventilelement 21 in seine Ausgangsposition zurückgestellt wird, d.h. in die Position nach Fig. 1.

Bei kaltem Verbrennungsmotor ist die Verbindung von dem Kühler über den Anschluss 12 zu der Mischkammer 15 mittels des Hauptventiltellers 22 geschlossen. Ebenso ist die Verbindung von dem Anschluss 14 des Motoraustritts zu der Mischkammer 15 geschlossen. Damit wird eine Kühlmittelströmung bis auf Leckströme weitgehend unterbunden, so dass eine schnelle Erwärmung des Verbrennungsmotors und des Kühlmittels erfolgt.

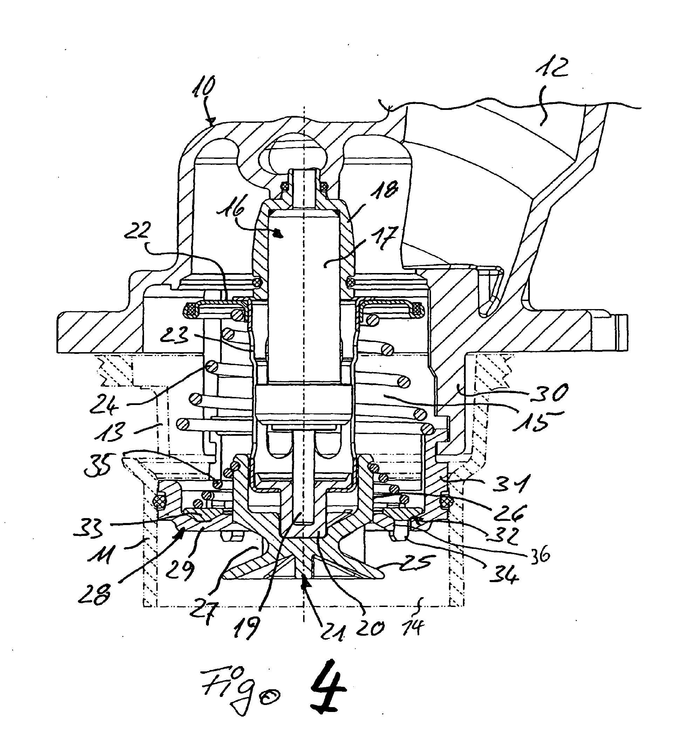

Wenn bei kaltem Verbrennungsmotor und entsprechend kaltem Kühlmittel der Verbrennungsmotor mit erhöhter Drehzahl betrieben wird, so entsteht im Bereich des Anschlusses 14 von dem Motoraustritt ein Überdruck. Dieser Überdruck bewirkt, dass das Überdruckventil 32 öffnet, d.h. der Überdruckventilring 33 gegen die Wirkung der Überdruckventilfeder 35 von dem Ringsteg 29 abhebt und die Durchbrechungen 36 freigibt. Es ergibt sich somit eine Kühlmittelströmung von dem Anschluss 14 des Motoraustritts zu dem Anschluss 13 des Motoreintritts, so dass thermische und / oder mechanische Überbeanspruchungen des Verbrennungsmotors oder mit diesem verbundener Komponenten vermieden werden. Wenn die Kühlmitteltemperatur die Ansprechtemperatur des thermostatischen Arbeitselementes 16 erreicht, so fährt dessen Arbeitskolben 19 aus. Dieser Arbeitskolben 19 nimmt zunächst nur das Kurzschlussventilelement 21 mit, wie das in Fig. 3 gezeigt ist. Dabei bewegt sich das Kurzschlussventilelement 21 relativ zu dem Mittelteil 23 des Hauptventiltellers 22. Wenn das Übertragungsteil 20 soweit bewegt worden ist, dass der Leerweg zu dem Boden des Mittelteils 23 überbrückt wird, wird zusätzlich zu dem Kurzschlussventil auch das Hauptventil geöffnet, d.h. der Hauptventilteller 22 wird von dem Ventilsitz des Ventiloberteils 10 abgehoben, wie das in Fig. 4 dargestellt ist. Nach einem gewissen Weg verschließt dann der Kurzschlussventilschieber 26 des Kurzschlussventilelements 21 das Kurzschlussventil, d.h. wenn er in den Bereich des von dem Ringsteg 29 gebildeten Ventilsitz gelangt.

Bei dem dargestellten Ausführungsbeispiel ist ein elektrisch beheizbares thermostatisches Arbeitselement 16 vorgesehen. In dem Inneren des stationären Gehäuses 17 ist ein elektrisches Heizelement angeordnet, dem in nicht näher dargestellter Weise durch den Boden des Gehäuses 17 hindurch elektrische Energie zugeführt wird. Bei einer abgewandelten Ausführungsform wird vorgesehen, dass das thermostatische Arbeitselement 16 elektrisch nicht beheizbar ist.

Bei einer weiter abgewandelten Ausführungsform wird vorgesehen, dass das thermostatische Arbeitselement 16 um 180° gedreht angeordnet ist, d.h. dass der Arbeitskolben 19 ortsfest, beispielsweise an dem Ventiloberteil 10 abgestützt ist, so dass bei einer Erwärmung und einer dadurch erfolgenden Ausfahrbewegung des Arbeitskolbens 19 das Gehäuse 17 mitgenommen wird. In diesem Fall sind der Hauptventilteller 22 und das Kurzschlussventilelement 21 an dem Gehäuse 17 des thermostatischen Arbeitselementes 16 angebracht.

Bei geschlossenem Kurzschlussventilschieber 26 des Kurzschlussventilelements 21 und geöffnetem Hauptventilteller 22 kann, bei zu hohem Differenzdruck zwischen Anschluss 14 und der Mischkammer 15, der Überdruckventilring 33 entgegen der Überdruckfeder 35 geöffnet werden und dem Überdruck abbauen.

Es ist ohne weiteres möglich, das in Fig. 1 bis 4 dargestellte Thermostatventil auch für eine Motoraustrittsregelung einzusetzen. In diesem Fall wäre der Anschluss 13 für den Motoraustritt, der Anschluss 14 für den Motoreintritt und der Anschluss 12 für eine Verbindung zu einem Kühlmittelkühler vorgesehen. In diesem Fall ist das Überdruckventil 32 funktionslos, da bei einer erhöhten Motordrehzahl bei kaltem Verbrennungsmotor dann ein Überdruck innerhalb der als Verteilerkammer dienenden Mischkammer 15 entstehen würde. Dann kann allerdings der Kurzschlussventilteller 25 des Kurzschlussventilelementes 21 zusammen mit der Kurzschlussventilfeder 35 als Überdruckventil arbeiten. Bei einer Verwendung des Thermostatventils zur Motoraustrittsregelung und einem Überdruck in der als Verteilerkammer dienenden Mischkammer 15 würde sich die Position nach Fig. 3 ergeben. Da bei dem Einsatz als Motoraustrittsregelung der Überdruckventilring 33 überflüssig ist, ist es zweckmäßig den Überdruckventilring 33 wegzulassen und ein ringförmiges Bauteil 28 mit geschlossenem Ringsteg 29 vorzusehen. Die Überdruckfeder 35 stützt sich dann direkt an dem ringförmigen Bauteil 28 ab.

Bei einer abgewandelten Ausführungsform ist das Thermostatventil als sogenannter Gehäusethermostat ausgebildet. Dieser besitzt ein zwei- oder mehrteiliges Gehäuse, in welchem alle Elemente untergebracht sind und das mit Schlauchanschlüssen für Motoraustritt, den Kühlmittelkühler und den Motoreintritt versehen ist.

## Patentansprüche

1. Thermostatventil für eine Kühlanlage eines Verbrennungsmotors mit einem in einer Mischkammer (15) anzuordnenden thermostatischen Arbeitselement (16), das als Antriebselement für ein zwischen Mischkammer (15) und einem Anschluss von einem Kühlmittelkühler anzuordnendes Hauptventilelement (22, 23) und für zwei Kurzschlussventilelemente dient, die vor der Mischkammer (15) anzuordnen sind und die derart relativ zu einem Ventilsitz angeordnet sind, dass bei einer Ausfahrbewegung des thermostatischen Arbeitselementes (16) das zunächst geschlossene erste Kurzschlussventilelement öffnet und das andere, bei weiterer Ausfahrbewegung schließt, wobei ein gemeinsames Kurzschlussventilelement (21) vorgesehen ist, das einen als Kurzschlussventilschieber (26) dienenden Abschnitt und einen in Ausfahrrichtung des thermostatischen Arbeitselementes (16) vorgeschalteten Kurzschlussventilteller (25) aufweist, zwischen denen ein gemeinsamer Ventilsitz vorgesehen ist, und **dadurch gekennzeichnet, dass** in dem gemeinsamen Ventilsitz ein zur Mischkammer (15) hin öffnendes Überdruckventil (32) vorgesehen ist.

2. Thermostatventil nach Anspruch 1, **dadurch gekennzeichnet, dass** der gemeinsame Ventilsitz von einem ringförmigen Bauteil (28) gebildet wird, das einen dichtend in einen Motorblock (11) oder einen Zylinderkopf einsetzbaren Abschnitt und einen nach innen ragenden Ringsteg (29) aufweist, dessen innerer Rand als Ventilsitz für den Kurzschlussventilschieber (26) und als Ventilsitz für den Kurzschlussventilteller (25) dient.

3. Thermostatventil nach Anspruch 2, **dadurch gekennzeichnet, dass** der Ringsteg (29) des ringförmigen Bauteils (28) mit Durchbrechungen (36) versehen ist, die auf der Seite der Mischkammer (15) mit einem Überdruckventilring (33) abgedeckt sind, der mit einer Überdruckventilfeder (35) belastet ist.

4. Thermostatventil nach einem der Ansprüche 1 bis 3, **dadurch gekennzeichnet, dass** die Überdruckventilfeder (35) an dem gemeinsamen Kurzschlussventilelement (21) abgestützt ist.

5. Thermostatventil nach einem der Ansprüche 1 bis 4, **dadurch gekennzeichnet, dass** das ringförmige Bauteil (28) an einem Ventiloberteil (10) angebracht ist und als Wiederlager für eine das Hauptventilelement (22, 23) belastende Rückstellfeder oder Schließfeder (24) dient.

6. Thermostatventil nach einem der Ansprüche 1 bis 5, **dadurch gekennzeichnet, dass** zwischen dem thermostatischen Arbeitselement (16) und dem Hauptventilelement (22, 23) ein Leerweg vorgesehen ist.

7. Thermostatventil nach einem der Ansprüche 1 bis 6, **dadurch gekennzeichnet, dass** zwischen dem Kurzschlussventilschieber (26) und dem Kurzschlussventilteller (25) des gemeinsamen Kurzschlussventilelementes (21) in Ausfahrrichtung des thermostatischen Arbeitselementes (16) ein offener Bereich belassen ist vorzugsweise in Form eienr ringnutartigen Aussparung (27).

## Claims

1. Thermostatic valve for a cooling system of an internal combustion engine, having a thermostatic operating element (16) to be arranged in a mixing chamber (15) and which is used as the drive element for a main valve element (22, 23) to be arranged between the mixing chamber (15) and a connection of a coolant cooler, and for two bypass valve elements to be arranged upstream of the mixing chamber (15), which are arranged relative to a valve seat such that upon an extending movement of the thermostatic operating element (16) the initially closed first bypass valve element opens and the other bypass valve element closes upon a further extending movement, wherein a common bypass valve element (21) is provided that has a section acting as a bypass valve slide (26) and a bypass valve disk (25) arranged upstream in the extending direction of the thermostatic operating element (16), between which is provided a common valve seat, **characterized in that** a pressure relief valve (32) that opens toward the mixing chamber (15) is provided in the common valve seat.

2. Thermostatic valve according to Claim 1, **characterized in that** the common valve seat is formed by an annular component (28) that has a section insertable in sealing manner into an engine block (11) or cylinder head and a radially inward-protruding annular rib (29) whose inner rim acts as the valve seat for the bypass valve slide (26) and as a valve seat for the bypass valve disk (25).

3. Thermostatic valve according to Claim 2, **characterized in that** the annular rib (29) of the annular component (28) is provided with apertures (36) covered on the side of the mixing chamber (15) by a pressure relief valve ring (33) subjected to load by a pressure relief valve spring (35).

4. Thermostatic valve according to one of Claims 1 to 3, **characterized in that** the pressure relief valve spring (35) is supported on the common bypass valve element (21).

5. Thermostatic valve according to one of Claims 1 to 4, **characterized in that** the annular component (28) is provided on a valve upper part (10) and acts as an abutment for a return spring or closing spring (24) loading the main valve element (22, 23).

6. Thermostatic valve according to one of Claims 1 to 5, **characterized in that** an idle travel path is provided between the thermostatic operating element (16) and the main valve element (22, 23).

7. Thermostatic valve according to one of Claims 1 to 6, **characterized in that** an open area, preferably in the form of an annular groove-like recess (27), is left between the bypass valve slide (26) and the bypass valve disk (25) of the common bypass valve element (21) in the extending direction of the thermostatic operating element (16).

## Revendications

1. Soupape thermostatique pour un système de refroidissement d'un moteur thermique avec un élément thermostatique actif (16) devant être placé dans une chambre de mélange (15) et qui sert d'élément d'entraînement pour un élément principal de soupape (22, 23) devant être placé entre la chambre de mélange (15) et un raccord d'un refroidisseur du liquide de refroidissement, et pour deux éléments de soupape court-circuiteurs devant être placés en amont de la chambre de mélange (15) et disposés par rapport à un siège de soupape de manière telle que, lors d'un déploiement de l'élément thermostatique actif (16), l'élément de soupape court-circuiteur tout d'abord fermé s'ouvre et l'autre se ferme quand le déploiement se poursuit, sachant qu'est prévu un élément de soupape court-circuiteur commun (21) qui présente une partie servant de tiroir de soupape court-circuiteur (26) et une tête de soupape court-circuiteuse (25) disposée en amont dans le sens de déploiement de l'élément thermostatique actif (16), entre lesquelles est prévu un siège de soupape commun, et **caractérisée en ce que** dans le siège de soupape commun est prévue une soupape de surpression (32) s'ouvrant en direction de la chambre de mélange (15).

2. Soupape thermostatique selon la revendication 1, **caractérisée en ce que** le siège de soupape commun est formé par un composant annulaire (28) qui présente une partie insérable en assurant l'étanchéité dans un bloc-moteur (11) ou une culasse de cylindre, ainsi qu'une âme annulaire (29) faisant saillie vers l'intérieur, dont le bord intérieur sert de siège de soupape pour le tiroir de soupape court-circuiteur (26) et de siège de soupape pour la tête de soupape court-circuiteuse (25).

3. Soupape thermostatique selon la revendication 2, **caractérisée en ce que** l'âme annulaire (29) du composant annulaire (28) est munie d'ouvertures (36) qui, du côté de la chambre de mélange (15), sont recouvertes par un anneau de soupape de surpression (33) qui est chargé par un ressort de soupape de surpression (35).

4. Soupape thermostatique selon l'une des revendications 1 à 3, **caractérisée en ce que** le ressort de soupape de surpression (35) s'appuie sur élément de soupape court-circuiteur commun (21).

5. Soupape thermostatique selon l'une des revendications 1 à 4, **caractérisée en ce que** le composant annulaire (28) est placé sur une partie supérieure de soupape (10) et sert de contre-palier pour un ressort de rappel ou un ressort de fermeture (24) chargeant l'élément principal de soupape (22, 23).

6. Soupape thermostatique selon l'une des revendications 1 à 5, **caractérisée en ce qu'**une course morte est prévue entre l'élément thermostatique actif (16) et l'élément principal de soupape (22, 23).

7. Soupape thermostatique selon l'une des revendications 1 à 6, **caractérisée en ce que** dans le sens de déploiement de l'élément thermostatique actif (16) est laissée une zone ouverte, de préférence sous forme d'un évidement en rainure annulaire (27), entre le tiroir de soupape court-circuiteur (26) et la tête de soupape court-circuiteuse (25) de l'élément de soupape court-circuiteur commun (21).
